# EUROPEAN PATENT SPECIFICATION

(11) **EP 2 029 681 B1**
(45) Date of publication and mention of the grant of the patent: **17.11.2010**
(21) Application number: 07729802.4
(22) Date of filing: 01.06.2007
(51) Int. Cl.: C09D 133/00

(54) **PRESSURE SENSITIVE ADHESIVES**
HAFTKLEBER
ADHÉSIFS AUTOCOLLANTS

(30) Priority: 01.06.2006 US 809846 P
(43) Date of publication of application: 04.03.2009
(73) Proprietor: CYTEC SURFACE SPECIALTIES, S.A., 1070 Brussels (BE)
(72) Inventor: TERNORUTSKY, Leo, East Longmeadow, MA 01028 (US); GUO, Jong-Shing, Longmeadow, MA 01106 (US); CHEN, Augustin, Cheschire, MA 06410 (US)
(74) Representative: Destryker, Elise Martine
(86) International application number: PCT/EP2007/055405
(87) International publication number: WO 2007/138111

(56) References cited:
- US-A- 3 896 073
- US-A1- 2004 143 058

## Description

This invention relates to pressure sensitive adhesives (PSA) based on aqueous emulsions and processes for preparation of the adhesives. The pressure sensitive adhesives of the invention have enhanced resistance to water-whitening and may also be resistant to high shear and therefore coatable with high speed machines.

There is an increasing desired to provide no label look labels to improve eye appear to the consumer. This requires a highly transparent label adhesive laminate (i.e. facestock coated with PSA) so when the label is attached to the product, information appears to be directly printed thereon for maximum aesthetic impact. There is also a desire to use water borne rather than solvent based adhesives for environmental and other reasons. However conventional waterborne adhesives exhibit very poor water whitening resistance as the dried adhesive film quickly turns white when exposed to water. In many applications labels are exposed to water (e.g. labeled beverage containers may be cooled in an ice bath) where conventional aqueous PSAs would whiten and destroy the desired no label look. Enhanced water whitening resistance is also desired so the PSA maintains adhesion between the substrate and facestock when subjected to hot water spraying or immersion for example for bottle labels where the bottles are pasteurised. In general, resistance to water whitening is desirable anywhere a PSA with transparent facestock or substrate is subjected to water or high humidity. Examples include labels on the sides of trucks, signs and bottles.

Various adhesives with water whitening resistant properties are described are described in the prior art.

The applicant's patent applications: WO 03/006517, WO 03/006518, WO 04/029171, WO 04/029172 and WO 05/044880 disclose PSAs with good water whitening resistance.

US 2005/0176876 (Avery) describes an acrylic PSA composition where use of a combination of two specific monomers i) a trifluoroalkyl (meth)acrylate and ii) an alkylimidazolidone (meth)acrylate is stated to enhance water whitening of this PSA.

WO 00/61670 (Ashland) (= EP 1198502-A, US 2004-0076785 and US 6359092) describes a water whitening resistant PSA obtained from a monomer composition consisting essentially of a C>=4 alkyl acrylate, an ethylenically unsaturated acid or anhydride and stryene. This reference teaches that one should not use any additional monomers. The reference also teaches that use of a redox polymerisation initiator is an essential element to prepare these PSAs and that it is required for the dispersed phase in the PSA emulsion to have an average particle size of 100 nm or less.

WO 01/85867 (Ashland) (= EP 1240267-A, US 2004 0076785 and US 6359092) describes water whitening resistant PSAs obtaining using as the only emulsifier a polymeric surfactant of the structure: 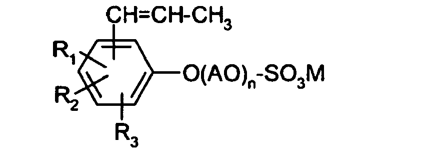 where R₁ is C₆₋₁₈alkyl, C₆₋₁₈alkenyl, or C₆₋₁₈aralkyl, R₂ is H or R₁, R₃ is H or propenyl; A is an C₂₋₄alkylene, n is an integer from 1 to 200, and M is an alkali metal, an ammonium ion, or an alkanolamine cation. The preferred and exempflied emulsifier is 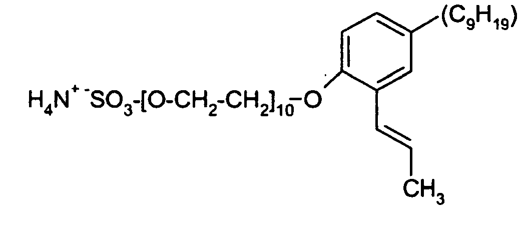 (Hitenol BC 10). This reference does not consider the problem of providing improved adhesive properties on low energy surfaces.

In general there are few aqueous PSA which have acceptable resistance to water whitening and it was believed there are limitations in the way such PSAs can be modified without reducing or eliminating the desired water whitening properties. For example it was believed that the surfactants must be polymerised within the latex for optimum water whitening resistance as prior art PSAs that use prior art conventional surfactants are much less resistant to water whitening.

High speed coating machines used to apply commercial PSAs at high volumes generate high shear fields. For example typical equipment such as Moyno pumps, slot dies, pressurized gravure and curtain coaters generate shear fields of typically over 150,000s⁻¹ in the coating head and/or in the progressive cavity pump. If conventional PSA emulsions are used in these machines the emulsion de-stabilises under the high shear field to form coagulum. The coagulum blocks the die, causes scratch lines on the coating web and builds up high pressure in the die and pump. Excess coagulum must therefore be removed and this requires the coater to be temporarily shut down which is undesirable as it increases cost.

This limits the commercial use of PSAs with the best water whitening resistance as such PSAs are not readily stable under high shear as the polymerisible surfactants reduce the stability of the latex when under high shear. It was believed that there was a trade off between water whitening resistance and stability under high shear as it was thought enhancing one property adversely effected the other.

For example JP 63-27572 discloses a high solids acrylic emulsion polymer of good stability which is stabillsed with a mixture of anionic and non ionic non polymerisible surfactants. However the surfactant mixture is added in large amounts and this adhesive has a poor resistance to water whitening.

US5468800 (Rhoem) describes an aqueous binder composition of high pH (2.2) containing butyl acrylate, methyl methacrylate, methacrylic acid and N-(2-methacryloyloxy ethyl)ethylene urea dispersed with sodium tri-iso-butyl phonol(ethoxy)₇sulphate. This reference does not relate to PSAs and if this composition was used as a PSA it would not be water whitening resistant.

None of the prior art water whitening PSAs provide a satisfactory solution to the problem of improving latex stability under high shear, whilst maintaining good water whitening resistance. There is a need for a curtain coatable PSA which also has acceptable resistant to water whitening.

It is therefore an object of the present invention to solve some or all of the problems with the prior art PSA emulsions. The present invention relates to a composition of and process for making a waterborne adhesive which combines acceptable water whitening resistance with good high shear stability.

Surprisingly the applicant has found an adhesive formulation which has both acceptable water whitening resistance and is also stable under high shear. It is particularly surprising that this is achieved without using a polymerisible surfactant.

Therefore broadly in accordance with the present invention there is provided an aqueous dispersion suitable for preparing pressure sensitive adhesive (PSA) having acceptable, optionally enhanced, resistance to water-whitening and acceptable, optionally enhanced, stability under high shear, where the dispersion comprises:
(a) an effective amount of surfactant mixture comprising
   (i) at least one ionic surfactant represented by Formula 1 as described hereafter comprising
      (I) a plurality, preferably at least three, aromatic rings,
      (II) at least one electronegative substituent formed from a strong acid, optionally selected from a mono valent oxy substituted sulfo anion, and/or a mono valent oxy substituted phospho anion, and
      (III) optionally at least one substituent comprising multiple hetero-organo units, optionally one or more repeating oxyhydrocarbylene units which may be the same or different, and
   (ii) optionally at least one non-ionic surfactant optionally non aromatic which preferably comprises at least one at least one substituent comprising multiple hetero-organo units, optionally one or more repeating oxyhydrocarbylene units which may be the same or different,
(b) a monomer composition comprising:
   (i) at least one hydrophobic polymer precursor (Component I),
   (ii) at least one hydrophilic polymer precursor (Component II)
   (iii) at least one partially hydrophilic polymer precursor (Component III)
   (iv) optionally at least one polymer precursor of Formula 4 (Component IV) 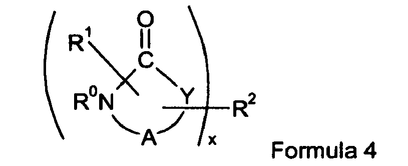 where
      Y denotes an electronegative group,
      R⁰ is H, OH or an optionally hydroxy substituted C₁₋₁₀hydrocarbo R¹ is H or a C₁₋₁₀hydrocarbo;
      R² is a C₁₋₁₀hydrocarbo group substituted by at least one activated unsaturated moiety; and
      A either represents a divalent organo moiety attached to both the HN and Y moieties so the A, NH, C=O and Y moieties together represent a ring having from 4 to 8 ring atoms, and R¹ and R² are attached to any suitable point on the ring; or
      A is not present (i.e. Formula 4 is linear and/or branched does not contain a heterocyclic ring) in which case R¹ and R² are attached to the R⁰ moiety,
      x is an integer from 1 to 4;
(c) optionally has a pH of from about 5.5 to about 9.0; and
(d) optionally has an average particle size of from about 100 nm to about 400 nm.

It is preferred that the adhesive of the invention exhibits the following properties
i) has a water whitening resistance rated of 1.5 or lower on the visual scale after immersion in water at 90°C for 20 minutes; and
ii) substantially no coagulum forms when the latex is subject to a shear field of at least 4000 s⁻¹ for at least 2 minutes.

Preferred dispersions of the invention are substantially free of any surfactant which will polymerise under the conditions of polymerisation of the monomer composition.

As used herein the term strong acid preferably indicates an acid that has a pKₐ (under the conditions of the process of the invention) of less than about 3, more preferably less than about 2.

Adhesive emulsions of the invention exhibit acceptable water whitening resistance combined with acceptable stability under high shear. They are suitable for uses such as waterborne adhesives to fix clear labels and can be applied by a wide variety of high speed methods including curtain coating.

### Water whitening resistance

The pressure sensitive adhesives of the invention exhibit resistance to water-whitening. The extent of water-whitening can be determined visually or by using UV/Visible spectroscopy measuring absorbance as a function of time as described below.

To test for water whitening resistance a test strip coated with a PSA is prepared conventionally (for example as described in the example section herein). The PSA strip is immersed in water at a specified temperature for 30 minutes and the appearance of the strip is then immediately assessed to determine its water whitening resistance. The assessment may be made visually by rating the test strips on a scale 0 (clear) to 5.0 (completely white / opaque). To assist the visual rating the test strip may be usefully compared against a series of photographs of standard strips pre-determined as having each rating. Alternatively the assessment may be measured by the increase of absorbance (as determined by UV/Visible spectroscopy) before and after immersion For example an suitable level of water whitening resistance may be when the increase of absorbance was less than 0.2, preferably less than 0.05, after 24 hour room temperature water immersion. If no temperature is specified herein the immersion was at ambient temperature (20°C).

It is preferred that PSAs which are used in applications such as beverage labels are resistant to water whitening at higher temperatures (90°C) as the labelled containers are pasteurised at such temperatures. However for other applications (such as labelling of health and beauty products) pasteurisation is not required and thus PSA that exhibit water whitening resistance at lower temperatures are also useful.

The PSAs of the present invention exhibit acceptable, preferably enhanced, resistance to water-whitening at ambient temperature. More preferred PSAs of the invention exhibit acceptable, most preferably enhanced water resistance at 90°C (i.e. are also pasteurisation resistant).

As used herein these terms are defined as follows for a given temperature after 20 minutes immersion: 'Acceptable' water whitening resistance means a rating of 1.5 or lower on the visual scale and/or an increase of absorbance of less than 0.2. 'Enhanced' water whitening resistance means a visual rating of 0.5 or lower and/or an increase of absorbance of less than 0.05.

As a comparison conventional aqueous PSA formulations which are not resistant to water whitening typically have a visual rating of 5.0 after immersion at ambient temperature for only 10 minute.

### High shear stability

As used herein high shear means a shear rate of at least 4000 s⁻¹, preferably at least 20,000 s⁻¹, more preferably at least 70,000 s⁻¹, for example at least 150,000 s⁻¹.

Conveniently as used herein acceptable high shear stable means substantially no coagulum forms (i.e. the emulsion or dispersion does not de-stabilise) when subject to a shear field of at least 4000 s⁻¹ for at least 2 minutes, more conveniently good high shear stability means stable at least 20,000 s⁻¹ for at least 5 minutes, most conveniently enhanced high shear stability means stable at least 70,000 s⁻¹ for at least 10 minutes, for example optimum high shear stability means stable at least 150,000 s⁻¹ for at least 10 minutes.

### Surfactants

Optionally at least one of the aromatic ionic surfactant(s) has a HLB value from about 8 to about 20, preferably from about 10 to about 18, more preferably from about 12 to about 17, for example about 16.

Conveniently at least one of the aromatic ionic surfactants is represented by Formula 1 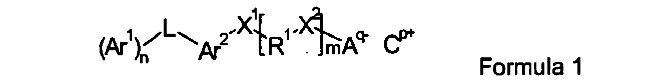 where Ar¹ and Ar² independently in each case each represent C₆₋₁₈hydrocarbo comprising an aromatic moiety,
L is a divalent organo linking group or direct bond, where optionally Ar¹ and Ar² may together form a fused ring;
R¹ is an optionally substituted C₁₋₈hydrocarbylene, more preferably C₁₋₆alkylene;
X¹ and X² independently in each case each represent O, S, CH₂, NH or NR³ where R³ represents optionally substituted C₁₋₂₀hydrocarbyl, more preferably C₁₋₁₀alkyl;
A represents a S(O)₁₋₃ or P(O)₁₋₃ moiety and q is from 1 to 3;
C is a suitable counter cation and p balances the charge q;
m represents an integer from 1 to 70, preferably from 5 to 60; more preferably from 10 to 50; most preferably from 10 to 30 for example about 16;
n represents an integer 1 to 6, optionally 1 to 3.

More conveniently the at least one ionic surfactant of Formula 1 is represented by Formula 1a 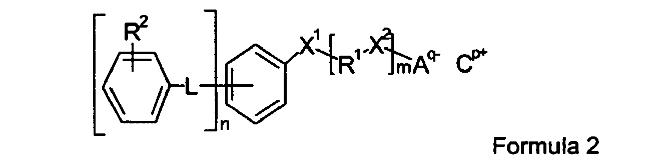 where L, R¹, X¹, X², A, C, q, p, n and m are as given for Formula 1, and R² is an optionally substituted C₁₋₈hydrocarbylene, more preferably C₁₋₆alkylene.

More preferably in Formula 2
L, R¹ and R² are independently in each case C₁₋₄alkylene, more preferably -CHCH₂(CH₃)-, -CH(CH₃)- or -CH₂CH₂-,
X¹ and X² independently in each case O, S, NH or -N(C₁₋₆alkyl)-, most preferably O,
A is a S(O)₃ or P(O)₃ and q is 1
C is a suitable counter cation and optionally p is 1;
n is from 1 to 3 more preferably 3, and m is from 10 to 30, most preferably 10 to 20 for example 16.

Most preferred surfactants of Formulae 1 and 2 are those that are obtained and/or obtainable by the reaction of styrene and phenol followed by phosphation and/or sulfation of the resultant alkoxylated multiply styryl substituted phenol (such as tristryryl phenol and/or derivatives thereof).

Particularly preferred tristryryl phenol ionic surfactants of Formulae 1 and 2 are those available from Rhodia under the following trade designations:
Soprophor 3D-33 (an ethoxylated phosphate ester free acid);
Soprophor 3D-33 / LN (a low non ionic ethoxylated phosphate ester free acid);
Soprophor 3D-FLK (an ethoxylated phosphate ester potassium salt);
Soprophor 3D-FL (an ethoxylated phosphate TEA (triethylamine) salt);
Soprophor 3D-FL-60 (an ethoxylated phosphate TEA (triethylamine) salt);
Soprophor 4D-384 (an ethoxylated sulfate, ammonium salt);
Soprophor 4D-360 (an ethoxylated sulfate, ammonium salt); and/or any suitable mixtures thereof.

An exemplified surfactant may be represented by 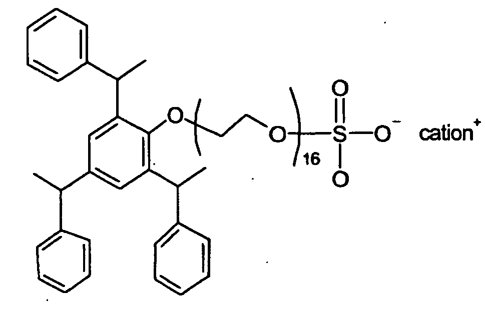 which (when the cation is ammonium) is available from Rhodia under the trade designation Soprophor 4D384.

In an alternative embodiment optionally substituted derivatives of alkylene naphthyl sulfonate available commercially from King Industries may be used as the ionic surfactant:
The optionally non-ionic surfactant may be any suitable surfactant such as an aliphatic non ionic surfactant of Formula 3

   R¹¹-X⁴-(Z-X⁵)_{w}H Formula 3

   where
   R¹¹ represents optionally substituted C₁₋₅₀hydrocarbyl, more preferably C₁₋₃₀alkyl; more preferably C₁₋₂₀alkyl;
   X⁴ and X⁵ independently in each case each represent O, S, CH₂, NH or NR¹² where R¹² represents optionally substituted C₁₋₂₀hydrocarbyl, (optionally C₁₋₁₀alkyl), more preferably X⁴ and X⁵ independently are O, S, NH or -N(C₁₋₆alkyl)-, most preferably O,
   Z represents C₁₋₄alkylene, more preferably -CHCH₂(CH₃)-, -CH(CH₃)- or -CH₂CH₂-,
   CH-CH₂ or 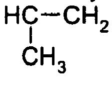 and
   'w' represents an integer from 1 to 50, preferably 1 to 30, more preferably 5 to 20.

Particularly preferred non-ionic surfactants are those mixtures of aliphatic non ionic surfactants available from Rhodia under the trade designation Abex 2535.

The surfactant mixture may optionally further comprise another ionic surfactant selected from a polycarboxylic acid and/or ester substituted by at least one electronegative substituent formed from a strong acid, preferably selected from a mono valent oxy substituted sulfo anion, and/or a mono valent oxy substituted phospho anion.

A preferred optional other ionic surfactant comprises those of the following formula 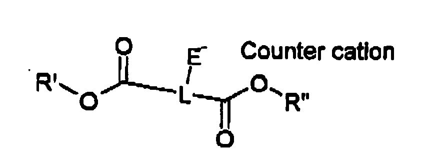 where E is the electronegative group, preferably SO₃ or PO₂,
L is a tirvalent organo slinking group, preferably C₁₋₄alkylene; and
R' and R" are independently each H or optionally substituted C₁₋₃₀ hydrocarbyl
More preferred optional other ionic surfactants are represented by

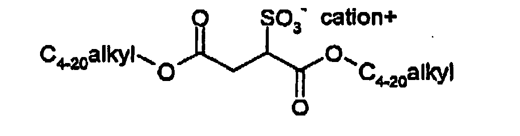

An example of such an optional other ionic surfactant is sodium dioctyl sulfosuccinate which is available commercially from Cytec under the trade name Aerosol OT.

The total amount of surfactant used to make the emulsion of the invention based on the total weight of monomers is about 0.1 to about 5% by weight, preferably from about 0.5 to about 2% by weight.

In a further aspect of the present invention there is provided a process for preparing polymeric latex emulsion suitable for use as a pressure sensitive adhesive, the process comprising the steps of
(a) forming in the presence of an effective amount of a surfactant mixture comprising
   (i) at least one ionic surfactant represented by Formula 1 comprising
      (I) a plurality, preferably at least three, aromatic rings,
      (II) at least one electronegative substituent formed from a strong acid, optionally selected from a mono valent oxy substituted sulfo anion, and/or a mono valent oxy substituted phospho anion, and
      (III) optionally at least one substituent comprising multiple hetero-organo units, optionally one or more repeating oxyhydrocarbylene units which may be the same or different, and
   (ii) optionally at least one non-ionic surfactant optionally non aromatic which preferably comprises at least one at least one substituent comprising multiple hetero-organo units, optionally one or more repeating oxyhydrocarbylene units which may be the same or different, an aqueous dispersion of:
      at least one hydrophobic polymer precursor (Component I),
      at least one hydrophilic polymer precursor (Component II)
      at least one partially polymer precursor (Component III)
         optionally at least one polymer precursor of Formula 4 (Component IV, as defined herein),
(b) polymerising said polymer precursor(s) simultaneously or subsequent to forming the dispersion in step (a) to form a latex emulsion; and
(c) optionally adjusting the pH of said emulsion with a suitable base to a pH of about 6.5 to about 9;
   wherein said effective amount of surfactant in said mixture is that amount necessary to produce a pressure sensitive adhesive having
   (i) a water whitening resistance rated of 1.5 or lower on the visual scale after immersion in water at 90°C for 20 minutes; and
   (ii) sufficient stability so substantially no coagulum forms when the latex is subject to a shear field of at least 4000 s⁻¹ for at least 2 minutes.

In an optional embodiment of the process of the present invention, the process comprises the addition steps of
forming further effective amount of the mixture from step (a) with an initial amount of thermal polymerization initiator to form a second mixture ; continuously adding the first dispersion formed from step (a) (the pre-emulsion) to the initiator mixture formed above to polymerize said pre-emulsion to form a latex emulsion, wherein additional polymerization initiator is added during the polymerization of said pre-emulsion.

Preferably an aqueous dispersion of the invention has a total solid content of from about 40% to about 70%, more preferably from about 50% to 65%, most preferably from about 55% to about 65%, for example from about 58% to about 62% by weight of the total dispersion.

Usefully in a process of the invention a PSA of the invention was obtained and/or is obtainable by polymerisation of the monomers in the presence of a water soluble initiator in an amount less than about 1.0 %, more usefully less than about 0.5%, most usefully less than about 0.2%, for example from about 0.1 % to about 0.2 % by weight of the total monomer composition.

In a yet other aspect of the present invention there is provided a method of using a surfactant mixture for the purpose of enhancing water whitening resistance in a high shear stable PSA latex where the surfactant mixture comprising at least two different ionic surfactant comprising a plurality of aromatic groups and at least one electronegative substituent formed from a strong acid, preferably selected from a mono valent oxy substituted sulfo anion, and/or a mono valent oxy substituted phospho anion, (preferably (i) at least one ionic surfactant of Formula 1 and (ii) one ionic surfactant of Formula 2 as defined herein) with optionally at least one non-ionic surfactant.

A still further aspect of the invention provides a dispersion obtained and/or obtainable from a process of the invention as described herein.

A still other aspect of the invention provides a pressure sensible adhesive obtained and/or obtainable from a dispersion of the invention as described herein.

Another aspect of the invention provides an adhesive laminate comprising a substantial transparent facestock having an adhesive coating thereon and optionally a release liner, the coating comprising a pressure sensible adhesive (PSA) of the invention as described herein (or a PSA obtained and/or obtainable from a dispersion of the invention as described herein), where the laminate exhibits acceptable, optionally enhanced resistance to water whitening and acceptable, optionally enhanced, resistance to high shear,

Still yet other aspect of the invention provides an article and/or container labeled with an adhesive laminate of the invention.

A further aspect of the invention provides a method of coating (preferably curtain coating) a substrate with the dispersion of the invention at high speed under high shear (optionally at least 4000 s⁻¹, preferably at least 20,000 s⁻¹, more preferably at least 70,000 s⁻¹, for example at least 150,000 s-¹) to obtain a film pressure sensitive adhesive thereon.

### Monomer composition

Unless otherwise indicated (e.g. for amounts of aryl arylalkylene within Component I) all of the weight amounts described herein for the following monomers are given as weight percentages by the total weight of monomers (Components I, II, III & IV).

### Component I

The hydrophobic monomer (Component I) may comprise, conveniently consist essentially of, at least one hydrophobic polymer precursor comprising at least one hydrophobic (meth)acrylate monomer as defined here below and/or arylalkylene polymer precursor.

The hydrophobic (meth)acrylate comprises
C₄₋₂₀hydrocarbyl, more conveniently C₄₋₁₄alkyl most conveniently C₄₋₁₀alkyl, for example C₄₋₈alkyl.

Suitable hydrophobic (meth)acrylate(s) are selected from: isooctyl acrylate, 4-methyl-2-pentyl acrylate, 2-methylbutyl acrylate, isoamyl acrylate, sec-butyl acrylate, n-butyl acrylate, 2-ethylhexyl acrylate, isodecyl methacrylate, isononyl acrylate, isodecyl acrylate, and/or mixtures thereof, especially 2-ethylhexyl acrylate and/or n-butyl acrylate, for example 2-ethylhexyl acrytate .

Preferably the arylalkylene comprises (optionally hydrocarbo substituted) stryene and conveniently the optional hydrocarbo may be C₁₋₁₀hydrocarbyl, more conveniently C₁₋₄alkyl.

Suitable arylalkylene monomers are selected from: styrene, α-methyl styrene, vinyl toluene, t-butyl styrene, di-methyl styrene and/or mixtures thereof, especially styrene.

The arylalkylene monomer may be present in Component I (the total hydrophobic monomer) up to about 30%, preferably from about 1% to about 20%, and more preferably from about 5% to about 15% by total weight of Component I.

The currently preferred Component I is a mixture of 2-ethylhexyl acrylate and/or n-butyl acrylate with styrene, more preferably a mixture of 2-ethylhexyl acrylate and stryene.

Component I may be present in a total amount from about 70% to about 90%, preferably from about 75% to about 85% by weight.

### Component II

Suitable hydrophilic polymer precursors of Component II are those that are copolymerisible with the hydrophobic polymer precursors(s) of Component I and are water soluble.

The hydrophilic monomers comprise, advantageously consist essentially of, at least one ethylenically unsaturated carboxylic acid. More preferred acids have one ethylenic group and one or two carboxy groups. Most preferably the acid(s) are selected from the group consisting of: acrylic acid (and oligomers thereof), beta carboxy ethyl acrylate, citraconic acid, crotonio acid, fumaric acid, itaconio acid, maleic acid, methacrylic acid and mixtures thereof; for example acrylic acid, methacrylic acid, beta carboxy ethyl acrylate and mixtures thereof.

The currently preferred Component II is a mixture of beta carboxy ethyl acrylate and acrylic acid.

Component II may be present in a total amount of at least about 1%, preferably from about 2% to about 10%, more preferably from about 3% to about 9%, most preferably from about 4% to about 8% by weight.

### Component III

The partially hydrophilic polymer precursor(s) of Component III may also be referred to as partially water soluble monomers and conveniently may comprise, conveniently consist essentially of, at least one C₁₋₂alkyl (meth)acrylate. More preferred partially hydrophilic monomers are selected from the group consisting of: methyl acrylate, methyl methacrylate, ethyl acrylate and mixtures thereof; most preferably ethyl acrylate, methyl methacrylate, and mixtures thereof, for example ethyl acrylate.

The currently preferred Component III is ethyl acrylate.

Component II may be present in a total amount of up to 10%, preferably from about 0.1% to about 5%, more preferably from about 0.1% to about 3%, most preferably from about 0.5% to about 2.5% by weight.

### Component IV

Component IV comprises, conveniently consists essentially of, at least one monomer of Formula 4 as defined herein.

### Formula 4

The ring moiet(ies) of Formula 4 are each attached to R² and in Formula 4 when x is 2, 3 or 4 then R² is multi-valent (depending on the value of x). If x is not 1 R¹ and Y may respectively denote the same or different moieties in each ring, preferably the same respective moieties in each ring. R¹ and R² may be attached at any suitable position on the ring.

Preferred monomers of Formula 4 comprise, conveniently consist essentially of, those where:
A represents a optional substituted divalent C₁₋₅hydrocarbylene; and
Y is divalent NR' (where R' is H, OH, optionally hydroxy substituted C₁₋₁₀hydrocarbo or R²) or divalent O,

More preferred monomers of Formula 4 comprise those where:
x is 1 or 2
Y is NR² (i.e. where Formula 1 is attached to R² via a ring nitrogen)
A represents a divalent C₁₋₃hydrocarbylene;
R⁰ is H,
R¹ is a C₁₋₁₀hydrocarbo; and
R² comprises a (meth)acryloxyhydrocarbo group or derivative thereof (e.g. maleic anhydride); and

Most preferred monomers of Formula 4 comprise those where:
x is 1, or 2 and the (optionally repeating) unit in Formula 1 is represented by Formula 6 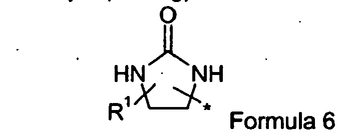 where the asterisk denotes the point of attachment of Formula 6 to R² (which may be at any suitable point on the ring preferably via a ring nitrogen); and
   R¹ is H or C₁₋₈hydrocarbyl
   R² comprises a (meth)acryloxyC₁₋₁₀hydrocarbo group.

More preferred monomers of Formula 4 comprise: 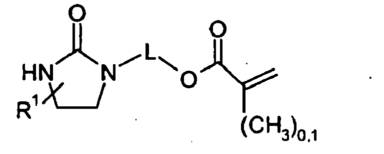 where R¹ is H or C₁₋₆alkyl and L is a suitable divalent organo linking group (such as C₁₋₁₀hydrocarbylene, for example C₁₋₆alkylene).

Further suitable uredo monomers of Formula 4 are described in "Novel wet adhesion monomers for use in latex paints" Singh et al, Progress in Organic Coatings, 34 (1998), 214-219, (see especially sections 2.2 & 2.3) and EP 0629672 (National Starch) both of which are hereby incorporated by reference.

Examples of monomers of Formula 4 are selected from: 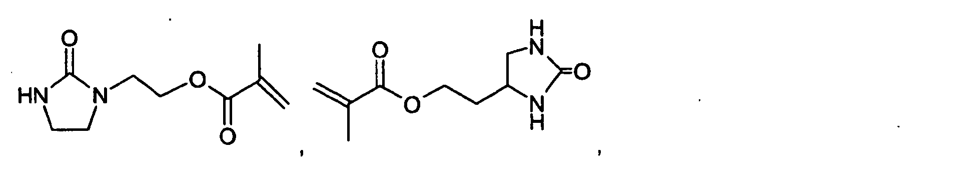 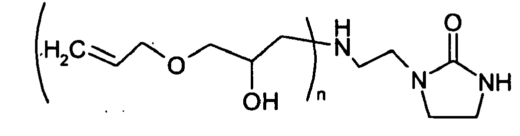 (where n is 1 to 4), 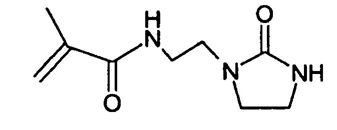 (available commercially from Atofina under the trade mark Sipomer^{®} WAM II) and suitable mixtures thereof.

In the same and/or another embodiment of the invention monomers as described in US 6,166,220 (Cytec Technology Corporation, the disclosure of which is hereby incorporated by reference) may used to comprise all or part of Component IV and/or Formula 4 herein and/or may also be incorporated in the formulations of the invention. Preferably such monomers are represented by formula "B(C=O)Y(C=O)A" on col. 2 line 25 of US 6,166,220 (where B, Y and A are as described therein). Such monomers may be available commercially from Cytec under registered trade mark Cylink^{®}. Examples of suitable such monomers are those available under the following trade designations: Cylink^{®} NMA and/or NMA-LF (self cross-linking monomers), Cylink® IBMA (an isobutoxy derivative of Cylink^{®} NMA), Cylink^{®} MBA; Cylink^{®} NBMA, Cylink^{®} TAC and/or Cylink^{®} C4 (a wet adhesion monomer).

Conveniently Component IV may be used as a substantially pure compound (or mixture of compounds) of Formula 1 or may be dissolved in a suitable solvent such as a suitable (meth)acrylate or acrylic derivative for example methyl methacrylate. Optionally such solutions may comprise from about 50% to about 75% by weight of Component IV.

Component IV may be present in a total amount from at least about 0.1 %, preferably from about 0.1 % to about 2.0%, more preferably from about 0.2% to about 1.0%, most preferably from about 0.3% to about 0.6% by weight.

### Activated unsaturated moiety

The term "activated unsaturated moiety", is used herein (for example for R² in Formula 4) to denote a species comprising at least one unsaturated carbon to carbon double bond in chemical proximity to at least one activating moiety. Preferably the activating moiety comprises any group which activates an ethylenically unsaturated double bond for addition thereon by a suitable electrophillic group. Conveniently the activating moiety comprises oxy, thio, (optionally organo substituted)amino, thiocarbonyl and/or carbonyl groups (the latter two groups optionally substituted by thio, oxy or (optionally organo substituted) amino). More convenient activating moieties are (thio)ether, (thio)ester and/or (thio)amide moiet(ies). Most convenient "activated unsaturated moieties" comprise an "unsaturated ester moiety" which denotes an organo species comprising one or more "hydrocarbylidenyl(thio)carbonyl(thio)oxy" and/or one or more "hydrocarbylidenyl(thio)- carbonyl(organo)amino" groups and/or analogous and/or derived moieties for example moieties comprising (meth)acrylate functionalities and/or derivatives thereof. "Unsaturated ester moieties" may optionally comprise optionally substituted generic α,β-unsaturated acids, esters and/or other derivatives thereof including thio derivatives and analogs thereof.

Preferred activated unsaturated moieties are those represented by a radical of Formula 5. 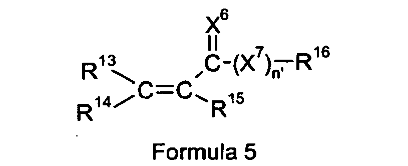 where n' is 0 or 1, X⁶ is oxy or, thio; X⁷ is oxy, thio or NR¹⁷ (where R¹⁷ represents H or optionally substituted organo), R¹³, R¹⁴, R¹⁵ and R¹⁶ each independently represent a bond to another moiety in Formula 1, H, optional substituent and/or optionally substituted organo groups, where optionally any of R¹³, R¹⁴, R¹⁵ and R¹⁶ may be linked to form a ring; where at least one of R¹³, R¹⁴, R¹⁵ and R¹⁶ is a bond; and all suitable isomers thereof, combinations thereof on the same species and/or mixtures thereof.

The terms "activated unsaturated moiety"; "unsaturated ester moiety" and/or Formula 5 herein represents part of a formula herein and as used herein these terms denote a radical moiety which depending where the moiety is located in the formula may be monovalent or multivalent (e.g. divalent). Thus for example in Formula 4 it will be appreciated that at least one of R¹³, R¹⁴, R¹⁵ and R¹⁶ denote a single covalent bond i.e. denote where Formula 5 is attached to the remainder of Formula 4.

More preferred moieties of Formula 5 (including isomers and mixtures thereof) are those where n' is 1; X⁶ is O; X⁷ is O, S or NR⁷.

R¹³, R¹⁴, R¹⁵ and R¹⁶ are independently selected from: a bond, H, optional substituents and optionally substituted C₁₋₁₀hydrocarbo, optionally R¹⁵ and R¹⁶ may be linked to form (together with the moieties to which they are attached) a ring; and where present R¹⁷ is selected from H and optionally substituted C₁₋₁₀hydrocarbo.

Most preferably n' is 1, X⁶ is O; X⁷ is O or S and R¹³, R¹⁴, R¹⁵ and R¹⁶ are independently a bond, H, hydroxy and/or optionally substituted C₁₋₆hydrocarbyl.

For example n' is 1, X⁶ and X⁷ are both O; and R³, R⁴, R⁵ and R⁶ are independently a bond, H, OH, and/or C₁₋₄alkyl; or optionally R⁵ and R⁶ may together form a divalent C₀₋₄alkylenecarbonylC₀₋₄alkylene moiety so Formula 5 represents a cyclic anhydride (e.g. when R¹⁵ and R¹⁶ together are carbonyl then Formula 5 represents a maleic anhydride or derivative thereof).

For moieties of Formula 5 where n' is 1 and X⁶ and X⁷ are both O then when one of (R¹³ and R¹⁴) is H and also R¹³ is H, Formula 5 represents an acrylate moiety, which includes acrylates (when both R¹³ and R¹⁴ are H) and derivatives thereof (when either R¹³ and R¹⁴ is not H). Similarly when one of (R¹³ and R¹⁴) is H and also R¹⁵ is CH₃, Formula 5 represents an methacrylate moiety, which includes methacrylates (when both R¹³ and R¹⁴ are H) and derivatives thereof (when either R¹³ and R¹⁴ is not H). Acrylate and/or methacrylate moieties of Formula 5 are particularly preferred.

Conveniently moieties of Formula 5 are those where n' is 1; X⁶ and X⁷ are both O; R¹³ and R¹⁴ are independently a bond, H, CH₃ or OH, and R¹⁵ is H or CH₃; R¹⁶ is H or R¹⁵ and R¹⁶ together are a divalent C=O group.

More conveniently moieties of Formula 5 are those where n' is 1; X⁶ and X⁷ are both O; R¹³ is OH, R⁴ is CH₃, and R¹⁵ is H and R⁶ is a bond and/or tautomer(s) thereof (for example of an acetoacetoxy functional species).

Most convenient unsaturated ester moieties are selected from: -OCO-CH=CH₂; -OCO-C(CH₃)=CH₂; acetoacetoxy, -OCOCH=C(CH₃)(OH) and all suitable tautomer(s) thereof.

It will be appreciated that any suitable moieties represented by Formula 5 could be used in the context of this invention such as other reactive moieties.

### General

The terms 'optional substituent' and/or 'optionally substituted' as used herein (unless followed by a list of other substituents) signifies the one or more of following groups (or substitution by these groups): carboxy, sulpho, formyl, hydroxy, amino, imino, nitrilo, mercapto, cyano, nitro, methyl, methoxy and/or combinations thereof. These optional groups include all chemically possible combinations in the same moiety of a plurality (preferably two) of the aforementioned groups (e.g. amino and sulphonyl if directly attached to each other represent a sulphamoyl group). Preferred optional substituents comprise: carboxy, sulpho, hydroxy, amino, mercapto, cyano, methyl, halo, trihalomethyl and/or methoxy.

The synonymous terms 'organic substituent' and "organic group" as used herein (also abbreviated herein to "organo") denote any univalent or multivalent moiety (optionally attached to one or more other moieties) which comprises one or more carbon atoms and optionally one or more other heteroatoms. Organic groups may comprise organoheteryl groups (also known as organoelement groups) which comprise univalent groups containing carbon, which are thus organic, but which have their free valence at an atom other than carbon (for example organothio groups). Organic groups may alternatively or additionally comprise organyl groups which comprise any organic substituents group, regardless of functional type, having one free valence at a carbon atom. Organic groups may also comprise heterocyclyl groups which comprise univalent groups formed by removing a hydrogen atom from any ring atom of a heterocyclic compound: (a cyclic compound having as ring members atoms of at least two different elements, in this case one being carbon). Preferably the non carbon atoms in an organic group may be selected from: hydrogen, halo, phosphorus, nitrogen, oxygen, silicon and/or sulphur, more preferably from hydrogen, nitrogen, oxygen, phosphorus and/or sulphur. Convenient phosphorous containing groups may comprise: phosphinyl (i.e. a '-PR₃' radical where R independently denotes H or hydrocarbyl); phosphinic acid group(s) (i.e. a '-P(=O)(OH)₂' radical); and phosphonic acid group(s) (i.e. a '-P(=O)(OH)₃' radical).

Most preferred organic groups comprise one or more of the following carbon containing moieties: alkyl, alkoxy, alkanoyl, carboxy, carbonyl, formyl and/or combinations thereof; optionally in combination with one or more of the following heteroatom containing moieties: oxy, thio, sulphinyl, sulphonyl, amino, imino, nitrilo and/or combinations thereof. Organic groups include all chemically possible combinations in the same moiety of a plurality (preferably two) of the aforementioned carbon containing and/or heteroatom moieties (e.g. alkoxy and carbonyl if directly attached to each other represent an alkoxycarbonyl group).

The term 'hydrocarbo group' as used herein is a sub-set of a organic group and denotes any univalent or multivalent moiety (optionally attached to one or more other moieties) which consists of one or more hydrogen atoms and one or more carbon atoms and may comprise one or more saturated, unsaturated and/or aromatic moieties. Hydrocarbo groups may comprise one or more of the following groups. Hydrocarbyl groups comprise univalent groups formed by removing a hydrogen atom from a hydrocarbon (for example alkyl). Hydrocarbylene groups comprise divalent groups formed by removing two hydrogen atoms from a hydrocarbon, the free valencies of which are not engaged in a double bond (for example alkylene). Hydrocarbylidene groups comprise divalent groups (which may be represented by "R₂C=") formed by removing two hydrogen atoms from the same carbon atom of a hydrocarbon, the free valencies of which are engaged in a double bond (for example alkylidene). Hydrocarbylidyne groups comprise trivalent groups (which may be represented by "RC≡"), formed by removing three hydrogen atoms from the same carbon atom of a hydrocarbon the free valencies of which are engaged in a triple bond (for example alkylidyne). Hydrocarbo groups may also comprise saturated carbon to carbon single bonds (e.g. in alkyl groups); unsaturated double and/or triple carbon to carbon bonds (e.g. in respectively alkenyl and alkynyl groups); aromatic groups (e.g. in aryl groups) and/or combinations thereof within the same moiety and where indicated may be substituted with other functional groups

The term 'alkyl' or its equivalent (e.g. 'alk') as used herein may be readily replaced, where appropriate and unless the context clearly indicates otherwise, by terms encompassing any other hydrocarbo group such as those described herein (e.g. comprising double bonds, triple bonds, aromatic moieties (such as respectively alkenyl, alkynyl and/or aryl) and/or combinations thereof (e.g. aralkyl) as well as any multivalent hydrocarbo species linking two or more moieties (such as bivalent hydrocarbylene radicals e.g. alkylene).

Any radical group or moiety mentioned herein (e.g. as a substituent) may be a multivalent or a monovalent radical unless otherwise stated or the context clearly indicates otherwise (e.g. a bivalent hydrocarbylene moiety linking two other moieties). However where indicated herein such monovalent or multivalent groups may still also comprise optional substituents. A group which comprises a chain of three or more atoms signifies a group in which the chain wholly or in part may be linear, branched and/or form a ring (including spiro and/or fused rings). The total number of certain atoms is specified for certain substituents for example C_{1-N}organo, signifies a organo moiety comprising from 1 to N carbon atoms. In any of the formulae herein if one or more substituents are not indicated as attached to any particular atom in a moiety (e.g. on a particular position along a chain and/or ring) the substituent may replace any H and/or may be located at any available position on the moiety which is chemically suitable and/or effective.

Preferably any of the organo groups listed herein comprise from 1 to 36 carbon atoms, more preferably from 1 to 18. It is particularly preferred that the number of carbon atoms in an organo group is from 1 to 12, especially from 1 to 10 inclusive, for example from 1 to 4 carbon atoms.

Some of the formulae and moieties described herein comprise poly hetero-organo preferably polyoxyhydrocarbylene; more preferably polyoxyalkylene, repeat units that for example can comprise suitable unsubstituted or substituted alkylene groups such as ethylene, propylehe, butylene, and isobutylene. It will be appreciated that in this context term multiple repeat units indicates that such moieties described and represented herein may comprise the same and/or different repeat units occurring singly and/or multiple times to represent homo-, block and/or random polymeric moieties and/or any suitable mixtures thereof.

As used herein chemical terms (other than IUAPC names for specifically identified compounds) which comprise features which are given in parentheses - such as (alkyl)acrylate, (meth)acrylate and/or (co)polymer - denote that that part in parentheses is optional as the context dictates, so for example the term (meth)acrylate denotes both methacrylate and acrylate.

Certain moieties, species, groups, repeat units, compounds, oligomers, polymers, materials, mixtures, compositions and/or formulations which comprise and/or are used in some or all of the invention as described herein may exist as one or more different forms such as any of those in the following non exhaustive list: stereoisomers (such as enantiomers (e.g. E and/or Z forms), diastereoisomers and/or geometric isomers); tautomers (e.g. keto and/or enol forms), conformers, salts, zwitterions, complexes (such as chelates, clathrates, crown compounds, cyptands / cryptades, inclusion compounds, intercalation compounds, interstitial compounds, ligand complexes, organometallic complexes, non-stoichiometric complexes, Π-adducts, solvates and/or hydrates); isotopically substituted forms, polymeric configurations [such as homo or copolymers, random, graft and/or block polymers, linear and/or branched polymers (e.g. star and/or side branched), cross-linked and/or networked polymers, polymers obtainable from di and/or tri-valent repeat units, dendrimers, polymers of different tacticity (e.g. isotactic, syndiotactic or atactic polymers)]; polymorphs (such as interstitial forms, crystalline forms and/or amorphous forms), different phases, solid solutions; and/or combinations thereof and/or mixtures thereof where possible. The present invention comprises and/or uses all such forms which are effective as defined herein.

Polymers of the present invention may be prepared by one or more suitable polymer precursor(s) which may be organic and/or inorganic and comprise any suitable (co)monomer(s), (co)polymer(s) [including homopolymer(s)] and mixtures thereof which comprise moieties which are capable of forming a bond with the or each polymer precursor(s) to provide chain extension and/or cross-linking with another of the or each polymer precursor(s) via direct bond(s) as indicated herein.

Polymer precursors of the invention may comprise one or more monomer(s), oligomer(s), polymer(s); mixtures thereof and/or combinations thereof which have suitable polymerisible functionality.

A monomer is a substantially monodisperse compound of a low molecular weight (for example less than one thousand daltons) which is capable of being polymerised.

A polymer is a polydisperse mixture of macromolecules of large molecular weight (for example many thousands of daltons) prepared by a polymerisation method, where the macromolecules comprises the multiple repetition of smaller units (which may themselves be monomers, oligomers and/or polymers) and where (unless properties are critically dependent on fine details of the molecular structure) the addition or removal one or a few of the units has a negligible effect on the properties of the macromolecule.

A oligomer is a polydisperse mixture of molecules having an intermediate molecular weight between a monomer and polymer, the molecules comprising a small plurality of monomer units the removal of one or a few of which would significantly vary the properties of the molecule.

Depending on the context the term polymer may or may not encompass oligomer.

The polymer precursor of and/or used in the invention may be prepared by direct synthesis or (if the polymeric precursor is itself polymeric) by polymerisation. If a polymerisible polymer is itself used as a polymer precursor of and/or used in the invention it is preferred that such a polymer precursor has a low polydispersity, more preferably is substantially monodisperse, to minimise the side reactions, number of by-products and/or polydispersity in any polymeric material formed from this polymer precursor. The polymer precursor(s) may be substantially un-reactive at normal temperatures and pressures.

Except where indicated herein polymers and/or polymeric polymer precursors of and/or used in the invention can be (co)polymerised by any suitable means of polymerisation well known to those skilled in the art. Examples of suitable methods comprise: thermal initiation; chemical initiation by adding suitable agents; catalysis; and/or initiation using an optional initiator followed by irradiation, for example with electromagnetic radiation (photo-chemical initiation) at a suitable wavelength such as UV; and/or with other types of radiation such as electron beams, alpha particles, neutrons and/or other particles.

The substituents on the repeating unit of a polymer and/or oligomer may be selected to improve the compatibility of the materials with the polymers and/or resins in which they may be formulated and/or incorporated for the uses described herein. Thus the size and length of the substituents may be selected to optimise the physical entanglement or interlocation with the resin or they may or may not comprise other reactive entities capable of chemically reacting and/or cross-linking with such other resins as appropriate.

### Particle size

The applicant has surprisingly found that the PSAs of the invention can be made with a larger particle size than previously thought necessary for water whitening resistance and the PSA still retains acceptable resistance to water whitening. There are process advantages in using a larger particle size (e.g. reduced viscosity) so in a preferred embodiment of the invention the particle size of the PSA is more than 100 nm, conveniently from about 100 nm to about 400 nm, more conveniently from about 200 nm to about 300 nm. The particle sizes herein are number average which may be measured by any suitable method such as light scattering.

### Other components

In compositions of the invention the surfactant package selected for the polymerization is substantially free of alkyl phenol ethoxylates (APEO) which are undesired for environment reasons. Yet stable operating conditions are still achieved with a stable pre-emulsion and low polymer grits in the final polymer emulsion and good water whitening resistance of the PSA when applied as coating.

The final emulsion of the invention is shear stable under a defined range of shear rates. For example when subject to a 150,000 s⁻¹ high shear field (Haake) the latex remains stable. The shear stability can be increased still further by selecting further suitable additives (such as additional surfactants, defoamer and/or rheological modifier) to further control the colloidal stability and rheology of the dispersion provided these do not adversely effect water whitening resistance.

The process(es) of the invention also utilizes at least one water-soluble polymerization initiator. Any conventional water-soluble polymerization initiator that is normally acceptable for emulsion polymerization of acrylate monomers may be used and such polymerization initiators are well known in the art. The typical concentration of water-soluble polymerization initiators is about 0.01 wt. % to about 1 wt. %, preferably about 0.01 wt. % to about 0.5 wt. %, of the total weight of monomers charged in the pre-emulsion. The water soluble polymerization initiators can be used alone or used in combination with one or more conventional reducing agents, such as bisulfites, metabisulfites, ascorbic acid, sodium formaldehyde sulfoxylate, ferrous sulfate, ferrous ammonium sulfate, ferric ethylenediamine-tetraacetic acid, and the like. Water-soluble polymerization initiators that can be employed according to the invention include water soluble persulfates, peroxides, azo compounds and the like, and mixtures thereof. Examples of water soluble initiators include, but are not limited to, persulfates (e.g. potassium persulfate, and sodium persulfate), peroxides (e.g. hydrogen peroxide, and tert-butyl hydroperoxide), and azo compounds (e.g. 4,4'-azobis(4-cyano-pentanoic acid), V-501 from Wako Chemicals). Currently the preferred water soluble polymerization initiators are the persulfates, particularly potassium or sodium persulfates.

The amount of water-soluble or water-dispersible surfactant added to the mixture of water, monomers and polymerization initiator is that amount effective to produce a latex emulsion having particles having an average particle size described herein. The effective amount needed to obtain the required particle size will be dependent on operating conditions known in the art to have an affect on particle size, including agitation (shear), viscosity, and the like. The remainder surfactant can be added at the beginning of the polymerisation, to form a pre emulsion, in batches during polymerisation and/or with monomers.

The polymerization can be initiated by any conventional method known to those skilled in the art, such as by application of heat or radiation, though heat is preferred. The method of initiation will be dependent on the water-soluble polymerization initiator used and will be readily apparent to those skilled in the art.

A water soluble polymerization initiator can be added to the polymerization reaction in any conventional manner known in the art. It is currently preferred to add a portion of the initiator to the initial reactor charge which comprises water, an effective amount of the water-soluble or water-dispersible surfactant, and an initial amount of the polymerization initiator. The remainder of the initiator can be added continuously or incrementally during the emulsion polymerization. It is currently preferred to incrementally add the remaining initiator.

Following polymerization, the pH of the latex emulsion is preferably adjusted by contacting the latex emulsion with a suitable base in an amount necessary to raise the pH to about 5.5 to about 9, more preferably from about 6.5 to about 8 most preferably about 7 to about 8. Examples of suitable bases for adjusting the pH of the latex emulsion include alkali metal hydroxides, alkaline earth metal hydroxides, ammonium hydroxide, amines, and the like, and mixtures thereof. The currently preferred base for use in the invention is ammonium hydroxide.

The polymerization reaction can be conducted in any conventional reaction vessel capable of an emulsion polymerization.

The polymerization can be conducted at a temperature typical for emulsion polymerizations. The polymerization is preferably conducted at a temperature in the range of about 50°C to about 95°C, preferably in the range of about 60°C to about 85°C.

The polymerization time is that time needed to achieve the desired conversion based on the other reaction conditions, e.g. temperature profile, and reaction components, e.g. monomers, initiator, etc. The polymerization time will be readily apparent to those skilled in the art.

Many other variations embodiments of the invention will be apparent to those skilled in the art and such variations are contemplated within the broad scope of the present invention.

Unless the context clearly indicates otherwise, as used herein plural forms of the terms herein are to be construed as including the singular form and vice versa.

The term "comprising" as used herein will be understood to mean that the list following is non-exhaustive and may or may not include any other additional suitable items, for example one or more further feature(s), component(s), ingredient(s) and/or substituent(s) as appropriate.

The terms 'effective', 'acceptable' 'active' and/or 'suitable' (for example with reference to any process, use, method, application, preparation, product, material, formulation, compound, monomer, oligomer, polymer precursor, and/or polymers of the present invention and/or described herein as appropriate) will be understood to refer to those features of the invention which if used in the correct manner provide the required properties to that which they are added and/or incorporated to be of utility as described herein. Such, utility may be direct for example where a material has the required properties for the aforementioned uses and/or indirect for example where a material has use as a synthetic intermediate and/or diagnostic tool in preparing other materials of direct utility. As used herein these terms also denote that a functional group is compatible with producing effective, acceptable, active and/or suitable end products.

Preferred utility of the present invention comprises use as a pressure sensitive adhesive, preferably having enhanced water whitening resistance and sufficient stability in a high shear field to be curtain coatable.

Further aspects of the invention and preferred features thereof are given in the claims herein.

### Examples

The present invention will now be described in detail with reference to the following non limiting examples which are by way of illustration only.

### Abbreviations of Materials

- AA: acrylic acid
- Abex 2535: An aliphatic ethoxylate nonionic surfactant, available from Rhodia
- Acticide MBS: A biocide containing 1,2-benzisothiazolin-3-one and 2-methyl-4-isothiazolin-3-one.
- Aerosol OT-75: sodium dioctylsulfosuccinate (or AOT) available from Cytec.
- DDM: n-dodecyl mercaptan
- Dl water: de-ionised water
- EA:: ethyl acrylate.
- EHA:: 2-ethylhexyl acrylate.
- Luperox H70: 70% aqueous dispersion of tetra-butyl hydrogen peroxide (TBHP)
- NaPS: sodium persulfate
- NH₄OH:: ammonium hydroxide (28%).
- Norsocryl 102:: a 75/25 mixture of methyl methacrylate and (2-methacryloxyethyl) heteromonocycle (a ureido monomer).
- Rongalit C: 5% aqueous dispersion of sodium formaldehyde sulfoxylate
- Sipomer: β -carboxyethyl acrylate, oligomers of acrylic acid, or β[beta] CEA
- Soprophore 4D384: sulfated polyarylphenol ethoylate, ammonium salt
- STY: styrene

**Example 1**

| Material | Amount (g) | | Wt% on monomer | |
|---|---|---|---|---|
| | Reactor | Pre-emulsion | Total | Active |
| DI water | 365.00 | | 30.417 | 0.000 |
| NaPS | 2.050 | | 0.171 | 0.171 |
| DI water | 38.940 | | 3.245 | 0.000 |
| NaPS | 2.650 | | 0.221 | 0.221 |
| DI water | 50.430 | | 4.203 | 0.000 |
| DI water | | 252.000 | 21.000 | 0.000 |
| Soprophor | | | | |
| 4D384/25% | | 38.400 | 3.200 | 0.800 |
| Abex 2535 | | 9.610 | 0.801 | 0.801 |
| Aerosol OT-75 | | 4.800 | 0.400 | 0.300 |
| AA | | 14.413 | 1.201 | 1.201 |
| Sipomer | | 12.027 | 1.002 | 1.002 |
| Norsocryl 102 | | 21.626 | 1.802 | 1.802 |
| STY | | 60.069 | 5.006 | 5.006 |
| EA | | 144.126 | 12.011 | 12.011 |
| EHA | | 947.739 | 78.978 | 78.978 |
| n-DDCM | | 0.600 | 0.050 | 0.050 |
| Luperox H 70 | 6:000 | | 0.500 | 0.500 |
| Rongalit C | 14.400 | | 1.200 | 0.060 |
| Acticide MBS | 4.500 | | 0.375 | 0.038 |
| NH₄OH (12.5%) | 24.000 | | 2.000 | 0.250 |

In a jacketed reactor equipped with a reflux condenser, thermocouple and twin blade agitator, a PSA latex was prepared.

The composition of this example polymer is 2-ethylhexyl acrylate / butyl acrylate / styrene / ethyl acrylate / acrylic acid / beta-CEA/ nDDM / Norsocryl 102. In the process, part of the de-ionised water, surfactants and the monomers are mixed to form a moderately thin, white pre-emulsion in a separate delay tank. The polykettle is charged with the rest of the de-ionised water. A solution of sodium persulfate is prepared in a second delay vessel. The jacket of the polykettle is heated until the polykettle mixture reaches 82°C, at which point part of the initiator solution is charged over 5 minutes. Immediately, the pre emulsion delay and the initiator delay are started. The pre emulsion delay period is 200 minutes and the initiator delay period is 210 minutes. The reaction temperature is maintained at 83°C during the delays. At the end of the initiator delay, the reactor content is held for 60 minutes at 86°C. After the hold period, the reaction temperature is cooled to 57°C and the post-polymerization redox initiator system is added. The batch is held at 55°C for 20 minutes and cooled to 45°C. Then, a small amount of de-ionised water charge and ammonium hydroxide are added to adjust the pH to within the range 6.3 to 7.5 as measured using a pH meter. The total solids is 61 .00%..

The neutralized latex is direct coated on a 1 mil Mylar film. The film is air dried for 10 min and heat dried at 90°C for 5 min. The coated Mylar is laminated with release liner (direct coat). For water whitening/water immersion tests, the release liners are removed thus exposing the polymer surfaces to water.

Water whitening resistance was evaluated visually as described herein and found to be acceptable. The latex was also sufficiently stable under high shear to be coatable onto a label facestock using a curtain coater.

## Claims

1. An aqueous dispersion suitable for preparing pressure sensitive adhesive (PSA) having acceptable, optionally enhanced, resistance to water-whitening and acceptable, optionally enhanced, stability under high shear, where the dispersion comprises:
(a) an effective amount of 0.1 % to 5 % by weight of surfactant mixture comprising
(i) at least one ionic surfactant represented by Formula 1 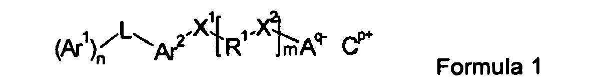 where Ar¹ and Ar² independently in each case each represent C₆₋₁₈hydrocarbo comprising an aromatic moiety,
L is a divalent organo linking group or direct bond, where optionally Ar¹ - and Ar² may together form a fused ring;
R¹ is an optionally substituted C₁₋₈hydrocarbylene;
X¹ and X² independently in each case each represent O, S, CH₂, NH or NR³ where R³ represents optionally substituted C₁₋₂₀hydrocarbyl; A represents a S(O)₁₋₃ or P(O)₁₋₃ moiety and q is from 1 to 3;
C is a suitable counter cation and p balances the charge q;
m represents an integer from 1 to 70; and
n represents an integer from 1 to 6, and
(ii) optionally at least one non-ionic surfactant optionally non aromatic which preferably comprises at least one substituent comprising multiple hetero-organo units, optionally one or more repeating oxyhydrocarbylene units which may be the same or different,
(b) a monomer composition comprising:
(i) at least one hydrophobic monomer (Component I) selected from hydrophobic C₄₋₂₀ hydrocarbyl (meth)acrylates and arylalkylene precursors ,
(ii) at least one hydrophilic monomer (Component II) selected from ehylenically unsaturated carboxylic acids,
(iii) at least one partially hydrophilic monomer (Component III) selected from C₁₋₂ alkyl(meth)acrylates,
(iv) optionally at least one a monomer of Formula 4 (Component IV) 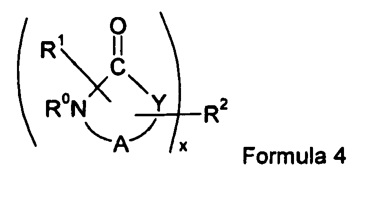 Y denotes an electronegative group,
R⁰ is H, OH or an optionally hydroxy substituted C₁₋₁₀hydrocarbo R¹ is H or a C₁₋₁₀hydrocarbo;
R² is a C₁₋₁₀hydrocarbo group substituted by at least one activated unsaturated moiety; and
A either represents a divalent organo moiety attached to both the HN and Y moieties so the A, NH, C=O and Y moieties together represent a ring having from 4 to 8 ring atoms, and R¹ and R² are attached to any suitable point on the ring; or
A is not present (i.e. Formula 4 is linear and/or branched does not contain a heterocyclic ring) in which case R¹ and R² are attached to the R⁰ moiety,
x is an integer from 1 to 4;
(c) optionally has a pH of from about 5.5 to about 9.0; and
(d) optionally has an average particle size of from about 100 nm to about 400 nm.

2. A pressure sensitive adhesive (PSA) obtainable from a dispersion as claimed in claim 1, where the adhesive exhibits the following properties
i) has a water whitening resistance rated of 1.5 or lower on the visual scale after immersion in water at 90°C for 20 minutes; and
ii) substantially no coagulum forms when the dispersion is subject to a shear field of at least 4000 s⁻¹ for at least 2 minutes.

3. A dispersion or PSA as claimed in either preceding claim where at least one of the aromatic ionic surfactants represented by Formula 1 comprises at least three aromatic rings.

4. A dispersion or PSA as claimed in claim 3 where Formula 1 is represented by Formula 1 a 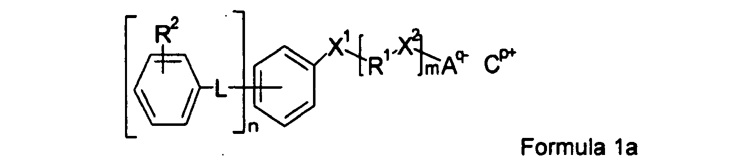 where L, R¹, X¹, X² , A, C, q, p, n and m are as given for Formula 1, and R² is an optionally substituted C₁₋₈hydrocarbylene.

5. A dispersion or PSA as claimed in claim 4 where in Formula 1 a L, R¹ and R² are independently in each case C₁₋₄alkylene,
X¹ and X² are independently in each case O, S, NH or -N(C₁₋₈alkyl)-,
A is a S(O)₃ or P(O)₃ and q is 1
C is a suitable counter cation and optionally p is 1;
n is from 1 to 3; and m is from 10 to 30.

6. A dispersion or PSA as claimed in any preceding claim where at least one of the aromatic ionic surfactants is

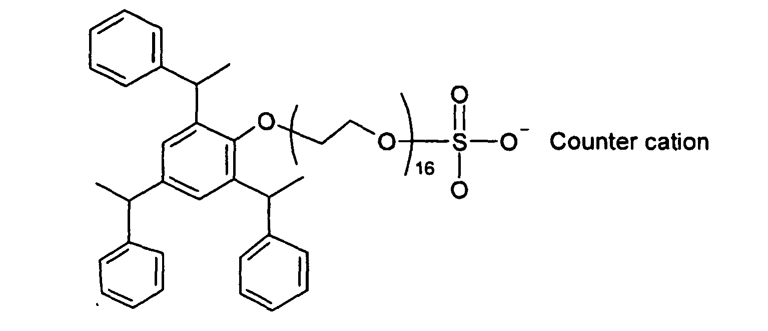

7. A dispersion or PSA as claimed in any of claims 3 to 6, where the non-ionic and/or a further ionic surfactant is present.

8. A dispersion or PSA as claimed in claim 7 wherein the further ionic surfactant is represented by the following formula 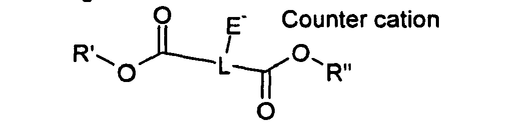 where
E is the electronegative group, preferably SO₃ or PO₂,
L is a tirvalent organo linking group, preferably C₁₋₄alkylene; and
R' and R" are independently each H or optionally substituted C₁₋₃₀ hydrocarbyl

9. A dispersion or PSA as claimed in claim 7, where the further ionic surfactant is represented by

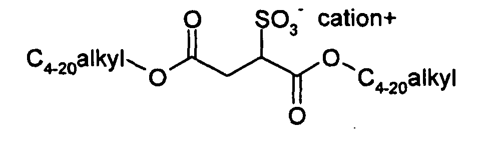

10. A dispersion or PSA as claimed in any preceding claim where the non-ionic surfactant is represented by Formula 3
R¹¹-X⁴-(Z-X⁵)_{w}H Formula 3
where
R¹¹ represents optionally substituted C₁₋₅₀hydrocarbyl;
X⁴ and X⁵ independently in each case each represent O, S, CH₂, NH or NR¹² where R¹² represents optionally substituted C₁₋₂₀hydrocarbyl,
Z represents C₁₋₄alkylene, and
'w' represents an integer from 1 to 50.

11. A dispersion as claimed in claim 10 wherein the R¹¹ represents C₁₋₂₀ alkyl;
X⁴ and X⁵ represent O and 'w' represents an integer from 5 to 20.

12. A process for preparing polymeric latex emulsion suitable for use as a pressure sensitive adhesive, the process comprising the steps of
(a) forming in the presence of an effective amount of 0.1 % to 5 % by weight of a surfactant mixture comprising
(i) at least one ionic surfactant represented by Formula 1 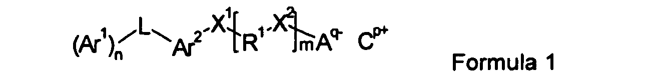 where Ar¹ and Ar² independently in each case each represent C₆₋₁₈hydrocarbo comprising an aromatic moiety,
L is a divalent organo linking group or direct bond, where optionally Ar¹ and Ar² may together form a fused ring;
R¹ is an optionally substituted C₁₋₈hydrocarbylene;
X¹ and X² independently in each case each represent O, S, CH₂, NH or NR³ where R³ represents optionally substituted C₁₋₂₀hydrocarbyl; A represents a S(O)₁₋₃ or P(O)₁₋₃ moiety and q is from 1 to 3;
C is a suitable counter cation and p balances the charge q;
m represents an integer from 1 to 70; and
n represents an integer 1 to 6
(ii) optionally at least one non-ionic surfactant optionally non aromatic which
preferably comprises at least one substituent comprising multiple hetero-organo units, optionally one or more repeating oxyhydrocarbylene units which may be the same or different,
an aqueous dispersion of:
at least one hydrophobic polymer precursor(s) (Component I) selected from hydrophobic C₄₋₂₀ hydrocarbyl (meth)acrylates and arylalkylene precursors,
at least one hydrophilic polymer precursor(s) (Component II) selected from ehylenically unsaturated carboxylic acids, at least one partially hydrophilic polymer precursor(s) (Component III) selected from C₁₋₂ alkyl(meth)acrylates, optionally at least one polymer precursor(s) of Formula 4 (Component IV, as defined herein),
(b) polymerising said polymer precursor(s) simultaneously or subsequent to forming the dispersion in step (a) to form a latex emulsion; and
(c) optionally adjusting the pH of said emulsion with a suitable base to a pH of about 6.5 to about 9;
wherein said effective amount of surfactant in said mixture is that amount necessary to produce a pressure sensitive adhesive having
(i) a water whitening resistance rated of 1.5 or lower on the visual scale after immersion in water at 90°C for 20 minutes; and
(ii) sufficient stability so substantially no coagulum forms when the latex is subject to a shear field of at least 4000 S⁻¹ for at least 2 minutes.

## Patentansprüche

1. Wässerige Dispersion, geeignet zur Herstellung eines Haftklebers (PSA) mit akzeptabler, gegebenenfalls verbesserter, Beständigkeit gegen Wasserausbleichen und akzeptabler, gegebenenfalls verbesserter, Stabilität unter hoher Scherung, wobei die Dispersion:
(a) eine wirksame Menge von 0,1 bis 5 Gew.-% eines Gemisches aus oberflächenaktiven Mitteln, umfassend
(i) mindestens ein ionisches oberflächenaktives Mittel, dargestellt durch die Formel 1 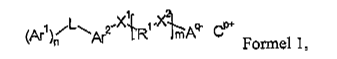 worin Ar¹ und Ar² unabhängig in jedem Fall jeweils C₆₋₁₈-Kohlenwasserstoff, umfassend eine aromatische Komponente, sind;
L eine zweiwertige Organo-Verknüpfungsgruppe oder eine direkte Bindung ist, wobei gegebenenfalls Ar¹ und Ar² einen kondensierten Ring bilden können; R¹ ein gegebenenfalls substituiertes C₁₋₈-Hydrocarbylen ist;
X¹ und X² unabhängig in jedem Fall jeweils O, S, CH₂, NH oder NR³ darstellen, wobei R³ gegebenenfalls substituiertes C₁₋₂₀-Hydrocarbyl darstellt;
A eine S(O)₁₋₃- oder P(O)₁₋₃-Komponente darstellt und q 1 bis 3 ist;
C ein geeignetes Gegenkation ist und p die Ladung q ausgleicht;
m eine ganze Zahl von 1 bis 70 darstellt; und
n eine ganze Zahl von 1 bis 6 darstellt; und
(ii) gegebenenfalls mindestens ein nicht-ionisches, gegebenenfalls nicht-aromatisches oberflächenaktives Mittel, das bevorzugt mindestens einen Substituenten umfasst, der mehrere Hetero-organo-Einheiten, gegebenenfalls eine oder mehrere Oxyhydrocarbylen-Wiederholungseinheiten, die gleich oder verschieden sein können, umfasst;
(b) eine Monomerzusammensetzung, umfassend;
(i) mindestens ein hydrophobes Monomer (Komponente I), ausgewählt aus hydrophoben C₄₋₂₀-Hydrocarbyl(meth)acrylaten und Arylalkylenpräkursoren;
(ii) mindestens ein hydrophiles Monomer (komponente II), ausgewählt aus ethylenisch ungesättigten Carbonsäuren;
(iii) mindestens ein teilweise hydrophiles Monomer (Komponente III), ausgewählt aus C₁₋₂-Alkyl(meth)acrylaten;
(iv) gegebenenfalls mindestens ein Monomer der Formel 4 (Komponente IV) 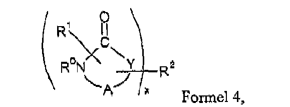 worin
Y eine elelctronegative Gruppe bezeichnet,
R⁰ H, OH oder ein gegebenenfalls Hydroxy-substituierter C₁₋₁₀-Kohlenwasserstoff ist;
R¹ H oder ein C₁₋₁₀-Kohlenwasserstoff ist;
R² eine C₁₋₁₀-Kohlenwasserstoffgruppe, substituiert durch mindestens eine aktivierte ungesättigte Komponente, ist; und
A entweder eine zweiwertige Organokomponente darstellt, die sowohl an die HNals auch die Y-Komponente gebunden ist, so dass die A-, NH-, C=O- und Y-Komponenten zusammen einen Ring mit 4 bis 8 Ringatomen darstellen, und R¹ und R² an irgendeinen geeigneten Punkt an dem Ring gebunden sind; oder
A nicht vorhanden ist (d, h. Formel 4 ist linear und/oder verzweigt, enthält keinen heterocyclischen Ring), wobei in diesem Fall R¹ und R² an die R⁰-Komponente gebunden sind, x eine ganze Zahl von 1 bis 4 ist;
umfasst;
(c) gegebenenfalls einen pH von etwa 5,5 bis etwa 9,0 hat; und
(d) gegebenenfalls eine durchschnittliche Teilchengröße von etwa 100 nm bis etwa 400 nm hat.

2. Haftkleber (PSA), erhältlich aus der Dispersion nach Anspruch 1, wobei das Haftmittel die folgenden Eigenschaften aufweist
i) eine Wasserausbleichbeständigkeit, bewertet mit 1,5 oder weniger auf der visuellen Skala nach dem Eintauchen in Wasser bei 90 °C für 20 Minuten; und
ii) im Wesentlichen keine Koagulatbildung, wenn die Dispersion für mindestens 2 Minuten einem Scherfeld von mindestens 4000 s⁻¹ ausgesetzt wird.

3. Dispersion oder PSA nach einem der vorhergehenden Ansprüche, wobei mindestens eines der aromatischen ionischen oberflächenaktiven Mittel, dargestellt durch die Formel 1, mindestens drei aromatische Ringe umfasst.

4. Dispersion oder PSA nach Anspruch 3, wobei Formel 1 durch Formel la dargestellt wird 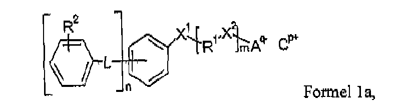 wobei L, R', X¹, X², A, C, q, p, n und m wie für Formel 1 angegebenen sind und R² ein gegebenenfalls substituiertes C₁₋₈-Hydrocarbylen ist.

5. Dispersion oder PSA nach Anspruch 4, wobei in Formel 1a
L, R¹ und R² unabhängig in jedem Fall C₁₋₄-Alkylen sind,
X¹ und X² unabhängig in jedem Fall O, S, NH oder -N(C₁₋₆-Alkyl)- sind,
A S(O)₃ oder P(O)₃ ist und q 1 ist;
C ein geeignetes Gegenkation ist und gegebenenfalls p 1 ist;
n 1 bis 3 ist und
m 10 bis 30 ist.

6. Dispersion oder PSA nach einem der vorhergehenden Ansprüche, wobei mindestens eines der aromatischen ionischen oberflächenaktiven Mittel
ist.

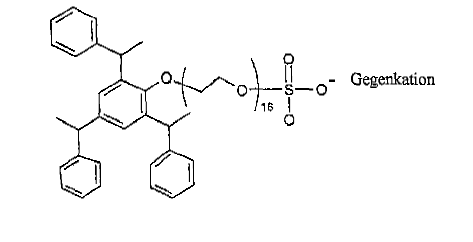

7. Dispersion oder PSA nach einem der Ansprüche 3 bis 6, wobei das nicht-ionische und/oder ein weiteres ionisches oberflächenaktives Mittel vorliegen.

8. Dispersion oder PSA nach Anspruch 7, wobei das weitere ionische oberflächenaktive Mittel durch die folgende Formel dargestellt wird 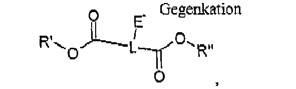 worin
E die elektronegative Gruppe ist, bevorzugt SO₃ oder PO₂,
L eine dreiwertige Organo-Verknüpfungsgruppe ist, bevorzugt C₁₋₄-Alkylen; und
R' und R" unabhängig jeweils H oder gegebenenfalls substituiertes C₁₋₃₀-Hydrocarbyl sind.

9. Dispersion oder PSA nach Anspruch 7, wobei das weitere ionische oberflächenaktive Mittel dargestellt wird durch

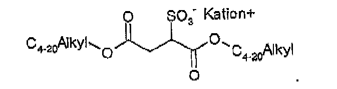

10. Dispersion oder PSA nach einem der vorhergehenden Ansprüche, wobei das nicht-ionische oberflächenaktive Mittel dargestellt wird durch Formel 3
R¹¹-X⁴-(Z-X⁵)_{w}H Formel 3,
worin
R¹¹ gegebenenfalls substituiertes C₁₋₅₀-Hydrocarbyl darstellt;
X⁴ und X⁵ unabhängig in jedem Fall jeweils O, S, CH₂, NH oder NR¹² darstellen, wobei R¹² gegebenenfalls substituiertes C₁₋₂₀-Hydrocarbyl darstellt,
Z C₁₋₄-Alkylen darstellt und
'w' eine ganze Zahl von 1 bis 50 darstellt.

11. Dispersion nach Anspruch 10, wobei R¹¹ C₁₋₂₀-Alkyl darstellt; X⁴ und X⁵ O darstellen und 'w' eine ganze Zahl von 5 bis 20 darstellt.

12. Verfahren zur Herstellung einer polymeren Latexemulsion, die zur Verwendung als ein Haftkleber geeignet ist, wobei das Verfahren die Schritte
(a) Bilden in Gegenwart einer wirksamen Menge von 0,1 bis 5 Gew.-% eines Gemisches aus oberflächenaktiven Mitteln, umfassend
(i) mindestens ein ionisches oberflächenaktives Mittel, dargestellt durch die Formel 1 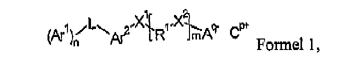 worin Ar¹ und Ar² unabhängig in jedem Fall jeweils C₆₋₁₈-Kohlenwasserstoff, umfassend eine aromatische Komponente, sind;
L eine zweiwertige Organo-Verknüpfungsgruppe oder eine direkte Bindung ist, wobei gegebenenfalls Ar¹ und Ar² einen kondensierten Ring bilden können;
R¹ ein gegebenenfalls substituiertes C₁₋₈-Hydrocarbylen ist;
X¹ und X² unabhängig in jedem Fall jeweils O, S, CH₂, NH oder NR³ darstellen, wobei R³ gegebenenfalls substituiertes C₁₋₂₀-Hydrocarbyl darstellt;
A eine S(O)₁₋₃- oder P(O)₁₋₃-Komponente darstellt und q 1 bis 3 ist;
C ein geeignetes Gegenkation ist und p die Ladung q ausgleicht;
m eine ganze Zahl von 1 bis 70 darstellt; und
n eine ganze Zahl von 1 bis 6 darstellt;
(ii) gegebenenfalls mindestens ein nicht-ionisches, gegebenenfalls nicht-aromatisches oberflächenaktives Mittel, das bevorzugt mindestens einen Substituenten umfasst, der mehrere Hetero-organo-Einheiten, gegebenenfalls eine oder mehrere Oxyhydrocarbylen-Wiederholungseinheiten, die gleich oder verschieden sein können, umfasst,
einer wässerigen Dispersion von
mindestens einem hydrophoben polymeren Präkursor(en) (Komponente I), ausgewählt aus hydrophoben C₄₋₂₀-Hydrocarbyl(meth)acrylaten und Arylalkylenpräkursoren; mindestens einem hydrophilen polymeren Präkursor(en) (Komponente II), ausgewählt aus ethylenisch ungesättigten Carbonsäuren; mindestens einem teilweise hydrophiles polymeren Präkursor(en) (Komponente III), ausgewählt aus C₁₋₂-Alkyl(meth)acrylaten; gegebenenfalls mindestens einem polymeren Präkursor(en) der Formel 4 (Komponente IV, wie hierin definiert),
(b) Polymerisieren des polymeren Präkursors / der polymeren Präkursoren gleichzeitig oder nacheinander unter Bildung der Dispersion in Schritt (a) zur Bildung einer Latexemulsion; und
(c) gegebenenfalls Einstellen des pH der Emulsion mit einer geeigneten Base auf einen pH von etwa 6,5 bis etwa 9
umfasst;
wobei die wirksame Menge an oberflächenaktiven Mittel in dem Gemisch die Menge ist, die notwendig ist zur Herstellung eines Haftklebers mit
i) einer Wasserausbleichbeständigkeit, bewertet mit 1,5 oder weniger auf der visuellen Skala nach dem Eintauchen in Wasser bei 90 °C für 20 Minuten; und
ii) ausreichenden Stabilität, so dass sich im Wesentlichen kein Koagulat bildet, wenn der Latex für mindestens 2 Minuten einem Scherfeld von mindestens 4000 s⁻¹ ausgesetzt wird.

## Revendications

1. Dispersion aqueuse, qui convient pour préparer un adhésif autocollant ayant une résistance acceptable, le cas échéant améliorée, au blanchiment par de l'eau et une stabilité acceptable, le cas échéant améliorée, sous haut cisaillement, la dispersion comprenant :
(a) une quantité efficace de 0,1 % à 5 % en poids d'un mélange d'agents tensioactifs, comprenant
(i) au moins un agent tensioactif ionique représenté par la formule 1 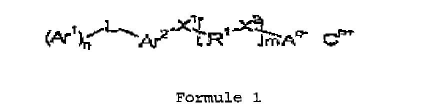 dans laquelle Ar¹ et Ar² représentent indépendamment, dans chaque cas, chacun un groupe hydrocarboné ayant de 6 à 18 atomes de carbone et comprenant un radical aromatique,
L est un groupe de liaison organique bivalent ou une liaison directe, Ar¹ et Ar² pouvant éventuellement former ensemble un cycle condensé ;
R¹ est un hydrocarbylène éventuellement substitué ayant de 1 à 8 atomes de carbone ;
X¹ et X² représentant indépendamment, dans chaque cas, chacun O, S, CH₂, NH ou NR³, R³ représentant un hydrocarbyle éventuellement substitué ayant de 1 à 20 atomes de carbone ;
A représente un radical S (O) ₁₋₃ ou P (O) ₁₋₃ et q va de 1 à 3 ;
C est un contre cation approprié et p équilibre la charge q ;
m représente un nombre entier allant de 1 à 70 ; et
n représente une nombre entier allant de 1 à 6, et
(ii) éventuellement au moins un agent tensioactif non ionique, éventuellement non aromatique, qui comprend, de préférence, au moins un substituant comprenant de multiples motifs hétéro-organiques, éventuellement une ou plusieurs unités répétitives oxyhydrocarbylène qui peuvent être identiques ou différentes,
(b) une composition de monomères comprenant :
(i) au moins un monomère hydrophobe (constituant I) choisi parmi les (méth)acrylates d'hydrocarbyle hydrophobes ayant de 4 à 20 atomes de carbone dans la partie hydrocarbyle et des précurseurs d'aralkylène,
(ii) au moins un monomère hydrophile (constituant II) choisi parmi des acides carboxyliques éthyléniquement insaturés,
(iii) au moins un monomère partiellement hydrophile (constituant III) choisi parmi les (méth)acrylates d'alkyle ayant de 1 à 2 atomes de carbone dans la partie alkyle,
(iv) éventuellement au moins un monomère répondant à la formule 4 (constituant IV) 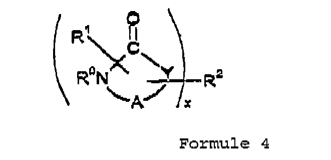 Y désigne un groupe électronégatif,
R⁰ est H, OH ou un groupe hydrocarboné, éventuellement hydroxy substitué et ayant de 1 à 10 atomes de carbone,
R¹ est H ou un groupe hydrocarboné ayant de 1 à 10 atomes de carbone ;
R² est une groupe hydrocarboné ayant de 1 à 10 atomes de carbone substitué par au moins un radical insaturé activé; et
Soit A représente un radical organique bivalent fixé aux deux radicaux HN et Y, de sorte que les radicaux A, NH, C=O et Y représentent ensemble un cycle de 4 à 8 atomes et R¹ et R² sont fixés en tout point approprié sur le cycle, ou
A n'est pas présent (c'est-à-dire que la formule 4 est linéaire et/ou ramifiée sans contenir un hétérocycle), auquel cas R¹ et R² sont fixés au radical R⁰,
X est un nombre entier allant de 1 à 4 ;
(c) a éventuellement un pH d'environ 5,5 à environ 9,0 ; et
(d) a éventuellement une taille moyenne de particules allant d'environ 100 nm à environ 400 nm.

2. Adhésif autocollant pouvant être obtenu à partir d'une dispersion telle que revendiquée à la revendication 1, dans laquelle l'adhésif présente les propriétés suivantes
i) il a une résistance au blanchiment par l'eau d'une valeur inférieure ou égale à 1,5 sur l'échelle visuelle après immersion dans de l'eau à 90°C pendant 20 minutes ; et
ii) il ne se forme sensiblement pas de coagulum lorsque l'on soumet la dispersion à un champ de cisaillement d'au moins 4000 s⁻¹ pendant au moins 2 minutes.

3. Dispersion ou adhésif autocollant tel que revendiqué dans l'une quelconque des revendications précédentes, dans laquelle au moins l'un des agents tensioactifs ioniques aromatiques représentés par la formule 1 comprend au moins trois cycles aromatiques.

4. Dispersion ou adhésif autocollant tel que revendiqué à la revendication 3, dans laquelle la formule 1 est représentée par la formule la 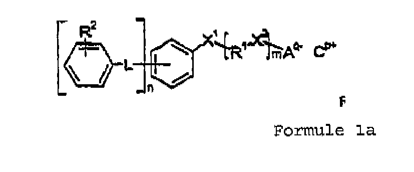 dans laquelle L, R¹, X¹, X², A, C, q, p, n et m sont tels que donnés pour la formule 1 et R² est un hydrocarbylène éventuellement substitué et ayant 1 à 8 atomes de carbone.

5. Dispersion ou adhésif autocollant tel que revendiqué à la revendication 4, dans laquelle, dans la formule 1a, L, R¹ et R² sont indépendamment dans chaque cas un alkylène ayant de 1 à 4 atomes de carbone,
X¹ et X² sont indépendamment dans chaque cas O, S, NH ou N(alkyle ayant de 1 à 6 atomes de carbone),
A est S(O)₃ ou P(O)₃ et q est 1,
C est un contre cation approprié et éventuellement p est 1 ;
n va de 1 à 3 ; et m va de 10 à 30.

6. Dispersion ou adhésif autocollant tel que revendiqué à l'une quelconque des revendications précédentes, dans laquelle au moins l'un des agents tensioactifs ioniques aromatiques est

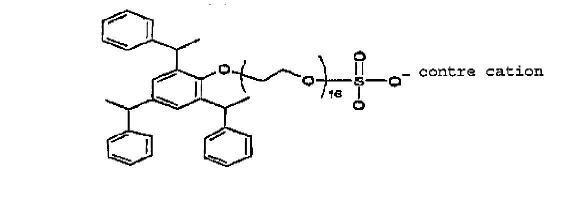

7. Dispersion ou adhésif autocollant tel que revendiqué à l'une quelconque des revendications 3 à 6, dans laquelle l'agent tensioactif non ionique et/ou l'autre agent tensioactif ionique est présent.

8. Dispersion ou adhésif autocollant tel que revendiqué à la revendication 7, dans laquelle l'autre agent tensioactif ionique est représenté par la formule suivante 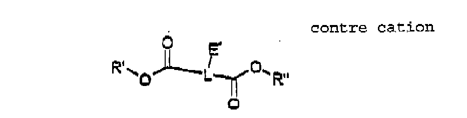 dans laquelle
E est le groupe électronégatif, de préférence SO₃ ou PO₂ L est un groupe de liaison organique trivalent, de préférence alkylène ayant de 1 à 4 atomes de carbone ; et
R' et R'' sont indépendamment chacun H ou hydrocarbyle éventuellement substitué et ayant de 1 à 30 atomes de carbone.

9. Dispersion ou adhésif autocollant tel que revendiqué à la revendication 7, dans laquelle l'autre agent tensioactif ionique est représenté par

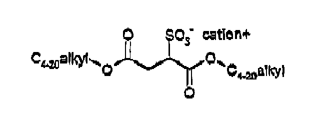

10. Dispersion ou adhésif autocollant tel que revendiqué à l'une quelconque des revendications précédentes, dans laquelle l'agent tensioactif non ionique est représenté par la formule 3
R¹⁷-X⁴-(Z-X^{s})_{w}H Formule 3
dans laquelle
R¹¹ représente un hydrocarbyle éventuellement substitué et ayant de 1 à 50 atomes de carbone ;
X⁴ et X⁵ représentent indépendamment, dans chaque cas, chacun O, S, CH₂, NH ou NR¹², R¹² représentant un hydrocarbyle éventuellement substitué et ayant de 1 à 20 atomes de carbone,
Z représente un alkylène ayant de 1 à 4 atomes de carbone, et 'w' représente un nombre entier allant de 1 à 50.

11. Dispersion telle que revendiquée à la revendication 10, dans laquelle R¹¹ représente un alkyle ayant de 1 à 20 atomes de carbone, X⁹ et X⁵ représentent O et 'w' représente un nombre entier allant de 5 à 20.

12. Procédé de préparation d'une émulsion polymère de latex, propre à être utilisée comme adhésif autocollant, le procédé comprenant les stades dans lesquels
(a) on forme, en la présence d'une quantité efficace de 0,1 % à 5 % en poids d'un mélange d'agents tensioactifs comprenant
(i) au moins un agent tensioactif ionique représenté par la formule 1 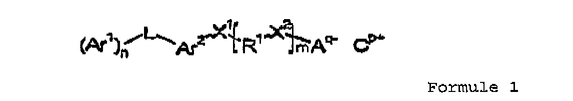 dans laquelle Ar¹ et Ar² représentent indépendamment, dans chaque cas, chacun un groupe hydrocarboné ayant de 6 à 18 atomes de carbone et comprenant un radical aromatique,
L est un groupe de liaison organique bivalent ou une liaison directe, Ar¹ et Ar² pouvant éventuellement former ensemble un cycle condensé ;
R¹ est un hydrocarbyléne éventuellement substitué et ayant de 1 à 8 atomes de carbone ;
X¹ et X² représentent indépendamment, dans chaque cas, chacun O, S, CH₂, NH ou NR³, R³ représentant un hydrocarbyle éventuellement substitué et ayant de 1 à 20 atomes de carbone ;
A représente un radical S(O)₁₋₃ ou P(O)₁₋₃ et q va de 1 à 3 ;
C est un contre cation approprié et p équilibre la charge q ;
m représente un nombre entier allant de 1 à 70 ; et
n représente un nombre entier de 1 à 6
(ii) éventuellement au moins un agent tensioactif non ionique, éventuellement non aromatique, qui comprend, de préférence, au moins un substituant comprenant de multiples motifs hétéro-organiques, éventuellement une ou plusieurs unités répétitives oxyhydrocarbylène qui peuvent être identiques ou différentes, une dispersion aqueuse de :
au moins un précurseur de polymère hydrophobe (constituant I) choisi parmi les (méth)acrylates d'hydrocarbyle hydrophobes ayant de 4 à 20 atomes de carbone dans la partie hydrocarbyle et les précurseurs d'aralkylène, au moins un précurseur de polymère hydrophile (constituant II) choisi parmi les acides carboxyliques éthyléniquement insaturés, au moins un précurseur de polymère partiellement hydrophile (constituant III) choisi parmi les (méth) acrylates d'alkyle ayant de 1 à 2 atomes de carbone dans la partie alkyle, éventuellement au moins un précurseur de polymère de formule 4 (constituant IV, tel que défini ici)
(b) on polymérise le ou lesdits précurseurs de polymère simultanément ou successivement, pour former la dispersion du stade (a), afin de former l'émulsion de latex ; et
(c) on ajuste éventuellement le pH de l'émulsion par une base appropriée à un pH d'environ 6,5 à environ 9 ;
dans lequel la quantité efficace d'agent tensioactif dudit mélange est la quantité nécessaire pour produire un adhésif autocollant ayant
i) une résistance au blanchiment par l'eau d'une valeur inférieure ou égale à 1,5 sur l'échelle visuelle, après immersion dans de l'eau à 90°C pendant 20 minutes ; et
ii) une stabilité suffisante de sorte qu'il ne se forme sensiblement pas de coagulum lorsque l'on soumet la dispersion à un champ de cisaillement d'au moins 4000 s⁻¹ pendant au moins 2 minutes.
